# EUROPEAN PATENT APPLICATION

(11) **EP 3 547 064 A1**
(43) Date of publication of application: **02.10.2019**
(21) Application number: 17874160.9
(22) Date of filing: 24.11.2017
(51) Int. Cl.: G05D 1/08, B62D 11/04, B62D 15/00

(54) **MOVING BODY**

(30) Priority: 28.11.2016 JP 2016229687
(71) Applicant: Equos Research Co., Ltd., Tokyo 101-0021 (JP)
(72) Inventor: ARAKI, Keizo, Tokyo 101-0021 (JP)
(74) Representative: TBK
(86) International application number: PCT/JP2017/042156
(87) International publication number: WO 2018/097224

(57) **Abstract**

[Problem]

To provide a moving body for which it is possible to change the movement direction without changing the orientation during travel.

[Solution]

With a moving body (1), an exterior case (2) and a drive part (3) are supported by a rotating shaft (4) so as to be able to rotate relative to each other. An upper support shaft (8) of the rotating shaft (4) and the exterior case (2) are connected at a position for which the center of gravity of the exterior case (2) is on the axis of a lower support shaft (10) of the rotating shaft (4). The weight of the exterior case (2) is such that a sufficiently high moment of inertia is provided so that no rotation occurs even when the drive part (3) rotates against the rotational resistance of a bearing (9). When the movement direction is changed during travel of the moving body (1), the drive wheel motor (7) is caused to operate as a differential so that the intended relative angle of the exterior case (2) and the drive part (3), as calculated from the movement direction and the speed of travel, matches the relative angle detected from the relative angle sensor (27). The center of gravity of the exterior case (2) is on the axis of the lower support shaft (10), and therefore the generation of moment to the exterior case (2) is suppressed, the drive part (3) rotates about the bearing (9) of the rotating shaft, and the movement direction of the drive part (3) can be changed without changing the orientation of the exterior case (2).

## Description

### [Technical Field]

The present invention relates to a moving body, especially to a moving body in which a moving direction can be changed without changing a facing direction of the moving body while travelling.

### [Background Art]

In Patent Literature 1, it is disclosed an unmanned vehicle having a rotating table 11 and a vehicle body 10 rotatably mounted on the rotating table 11 so that a shaft portion 17 of the rotating table 11 is utilized as a rotating shaft. Drive wheels 21, 22 are provided on the rotating table 11 and casters 14a to 14d as driven wheels are provided on vehicle body 10. The unmanned vehicle travels by driving the drive wheels 21, 22 of the rotating table 11.

In the rotating table 11, eight concave holes 23 are drilled at equal intervals around the shaft portion 17, and on a lower surface of the vehicle body 10, one protrusion 15 is set up. Based on that this protrusion 15 is fitted into any one of eight concave holes 23, a relative position of the vehicle body 10 and the rotating table 11 is fixed (locked).

Here, when it is desired to change the moving direction of the vehicle body 10 without changing the facing direction of the vehicle body 10, it is necessary to change the relative position between the vehicle body 10 and the rotating table 11. In this case, under a state that the unmanned vehicle is stopped, four outriggers 13a to 13d formed on the vehicle body 10 are extended and fitting between the protrusion 15 and the concave hole 23 is released. After the rotating table 11 is rotated to a desired direction under the above state, the outriggers 13a to 13d in the extended state are retracted and the protrusion 15 is fitted in any of the concave holes 23. Thereby, the vehicle body 10 and the rotating table 11 are locked under the state that the relative position between the vehicle body 10 and the rotating table 11 is changed. That is, the moving direction of the vehicle body 10 can be changed without changing the facing direction of the vehicle body 10.

### [Citation List]

### [Patent literature]

Patent Literature 1: Japanese Patent Application laid-open No. S60(1985)-148774

### [Summary of the Invention]

### [Technical Problem]

However, in the above unmanned vehicle, it is difficult to change the moving direction of the vehicle body 10 while travelling without changing the facing direction of the vehicle body 10. In the above unmanned vehicle, even if a locking mechanism between the protrusion 15 and the concave hole 23 is deleted, a center of mass of the vehicle body 10 does not necessarily match with the rotating shaft (shaft portion 17). Therefore, when the moving direction of the rotating table 11 during travelling is changed, the vehicle body 10 rotates due to moment generation by acceleration and deceleration. Further, since rotational resistance of four driven wheels (casters 14a to 14d) is not necessarily uniform, when the moving direction of the rotating table 11 is changed during travelling, the vehicle body 10 rotates due to moment generation by the driven wheels having larger rotational resistance. Therefore, during travelling of the unmanned vehicle, it is difficult to change the moving direction of the vehicle body 10 without changing facing direction of the vehicle body 10.

Due to the above, in the mentioned unmanned vehicle, the vehicle body 10 is fixed on the ground by the outriggers 13a to 13d under the stopped state, next the facing direction of the rotating table 11 is changed, further locking is done by fitting the protrusion 15 and the concave hole 23, thereby the moving direction of the vehicle body 10 is changed without changing the facing direction of the vehicle body 10.

The present invention has been done to solve the above problem and has an object to provide a moving body in which a moving direction can be changed without changing a facing direction.

### [Solution to Problem]

To accomplish the object, the moving body according to the present invention comprises a lower vehicle body having drive wheels and a lower side rotating shaft; and an upper vehicle body having an upper side rotating shaft, the upper vehicle body being connected to the lower vehicle body through the upper side rotating shaft; wherein both the upper vehicle body and the lower vehicle body are constituted so as to be relatively rotatable through the upper side rotating shaft and the lower side rotating shaft, wherein the upper vehicle body has enough large moment of inertia against rotational resistance of the upper side rotating shaft to an extent that the upper vehicle body does not rotate even when the lower vehicle body rotates, and wherein a center of mass of the upper vehicle body positions on a shaft line of the lower side rotating shaft.

### [Advantageous Effects of the Invention]

According to the moving body of claim 1, when the drive wheels of the lower vehicle body are driven, the upper vehicle body travels with the lower vehicle body. That is, the moving body travels (moves). The upper vehicle body is constituted so that the upper vehicle body can relatively rotate to the lower vehicle body through the upper side rotating shaft and the lower side rotating shaft. Further, the upper vehicle body has enough large moment of inertia against rotational resistance of the upper side rotating shaft to an extent that the upper vehicle body does not rotate even when the lower vehicle body rotates, and a center of mass of the upper vehicle body positions on a shaft line of the lower side rotating shaft. Therefore, even when the lower vehicle body changes the moving direction thereof during travelling of the lower vehicle body, moment generation to the upper vehicle body can be suppressed. Therefore, the moving direction of the moving body (lower vehicle body) can be changed during travelling of the moving body (lower vehicle body) without changing the facing direction of the moving body (upper vehicle body).

According to the moving body of claim 2, in addition to effects realized by claim 1, when the lower vehicle body is operated in the front and back direction, the control means supports the upper vehicle body through inverted pendulum control by the drive wheels. Thereby, the upper vehicle body can be supported by the lower vehicle body without providing the driven wheel and the like to the upper vehicle body and the upper vehicle body can be constituted so as not to ground. Therefore, when the driven wheel is provided to the upper vehicle body, moment generation in the upper vehicle body can be prevented.

According to the moving body of claim 3, in addition to effects realized by claim 1 or claim 2, when the lower vehicle body is operated in the left and right direction, the control means controls the weight transfer means which transfers the center of mass of the upper vehicle body in the left and right direction and supports the upper vehicle body. Therefore, when the lower vehicle body is operated in the left and right direction, the upper vehicle body can be supported by the lower vehicle body even when the driven wheel and the like are not provided to the upper vehicle body, thus the upper vehicle body can be constituted so as not to ground.

According to the moving body of claim 4, in addition to effects realized by claim 3, the weight transfer means is provided to the lower side rotating shaft of the lower vehicle body, and it is provided a slide mechanism capable of displacing a relative position of the lower side rotating shaft of a drive wheel side and the lower side rotating shaft of an upper vehicle body side in the left and right direction. Therefore, when the lower vehicle body is operated in the left and right direction, the upper vehicle body can be supported by the lower vehicle body even when the driven wheel and the like are not provided to the upper vehicle body, thus the upper vehicle body can be constituted so as not to ground.

According to the moving body of claim 5, in addition to effects realized by claim 3 or claim 4, the weight transfer means is provided to the lower side rotating shaft of the lower vehicle body, and it is provided a tilting mechanism capable of inclining the lower side rotating shaft in the left and right direction. Therefore, when the lower vehicle body is operated in the left and right direction, the upper vehicle body can be supported by the lower vehicle body even when the driven wheel and the like are not provided to the upper vehicle body, thus the upper vehicle body can be constituted so as not to ground. Here, the tilting mechanism as the weight transfer means may be installed in the moving body with the slide mechanism of claim 4.

According to the moving body of claim 6, in addition to effects realized by claim 1, since the driven wheel is provided to the lower vehicle body, the upper vehicle body can be supported by the lower vehicle body even when the driven wheel and the like are not provided to the upper vehicle body, thus the upper vehicle body can be constituted so as not to ground. Therefore, when the driven wheel and the like are provided to the upper vehicle body, moment generation to the upper vehicle body can be prevented.

According to the moving body of claim 7, in addition to effects realized by any one of claims 1 to 6, following effects can be realized. To the lower side rotating shaft of the lower vehicle body, it is provided a slide mechanism capable of displacing a relative position of the lower side rotating shaft of a drive wheel side and the lower side rotating shaft of an upper vehicle body side in the front and back direction and in the left and right direction. For example, in a case that the center of mass of the upper vehicle body is shifted due to that a baggage is put on the upper vehicle body, the slide mechanism is controlled by the slide control means and the center of mass of the upper vehicle body is returned on the shaft line of the lower side rotating shaft. Therefore, even when the moving body travels in the above state and the lower vehicle body changes the moving direction during travelling, moment generation to the upper vehicle body can be suppressed. Thus, during travelling of the moving body (lower vehicle body), the moving direction of the moving body (lower vehicle body) can be changed without changing the facing direction of the moving body (upper vehicle body).

### [Brief Description of Drawings]

Fig. 1(a) is an outline view of a moving body and Fig. 1(b) is a partial sectional view represented by partially cutting off a part of exterior case of the moving body.
Fig. 2 is a block diagram showing an electrical constitution of the moving body.
Fig. 3 is a flowchart of a steering process.
Fig. 4(a) is a partial sectional view represented by cutting off a part of the exterior case of the moving body in the second embodiment and Fig. 4(b) is a partial sectional view of the moving body in a case that a left and right weight transfer device is operated in the second embodiment.
Fig. 5 is a block diagram showing an electrical constitution of the moving body in the second embodiment.
Fig. 6 is a flowchart of the steering process in the second embodiment.
Fig. 7 is a partial sectional view represented by cutting off a part of the exterior case of the moving body in a modified example.

### [Description of Embodiments]

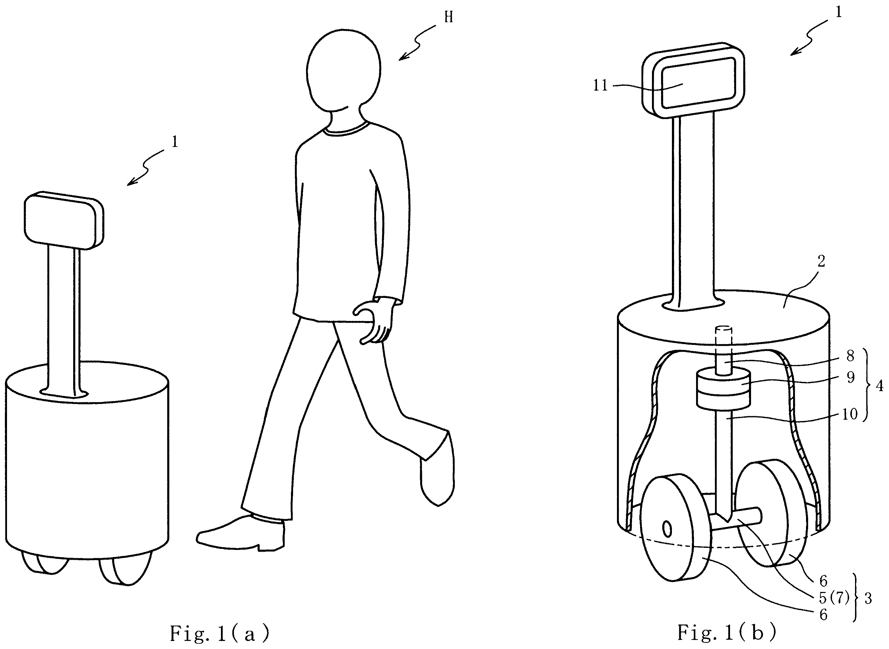

Hereafter, the preferred embodiments of the present invention will be described with reference to the attached drawings. First, a constitution of a moving body 1 according to the present embodiment will be described. Fig. 1(a) is an outline view of the moving body 1 and Fig. 1(b) is a partial sectional view represented by partially cutting off a part of exterior case 2 of the moving body 1. The moving body 1 functions as a device capable of following to a user H by moving to an appropriate position to the user H in front circumference of the user H.

As shown in Fig. 1, the moving body 1 has an approximately columnar exterior case 2, a drive part 3 and a rotating shaft 4. On the exterior case 2, it is provided an HMI portion 11 to input instructions of the user H to the moving body 1 and output information of the moving body 1 and the like to the user H. Here, the shape of the exterior case 2 is not limited to an approximately columnar shape and various shapes such as rectangular parallelepiped shape and the like can be adopted.

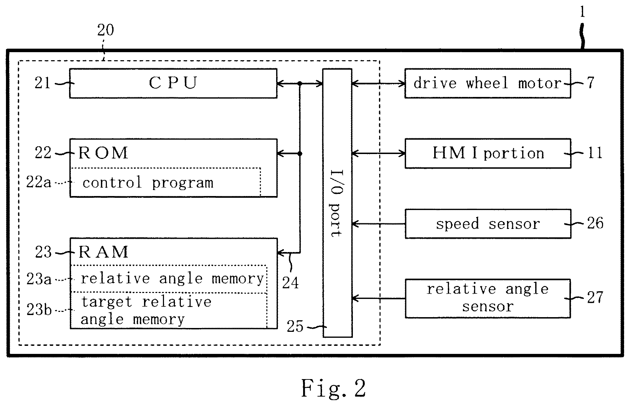

The drive part 3 is a device to travel and operate the moving body 1 and has a vehicle shaft 5 and drive wheels 6. The drive wheels 6 are respectively provided to both left and right end portions of the vehicle shaft 5 and drive wheel motors 7 to rotate and operate the left and right drive wheels 6 are respectively provided within the vehicle shaft 5. The drive wheel motor 7 rotates the drive wheel 6 based on control signals from a CPU 21 (see Fig. 2) mentioned later. By rotating forward and reversely the left and right drive wheel motors 7 with the same output, forward movement and backward movement of the moving body 1 are conducted. Further, by differentially operating the drive wheel motors 7, the moving direction of the moving body 1 is changed. Further, output current values of the motor and the like are output to the CPU 21 (see Fig. 2) from the drive wheel motors 7, thereby torque control of the drive wheel motors 7 is conducted by the CPU 21.

The rotating shaft 4 is a member to relatively and rotatably support the exterior case 2 and the drive part 3, and the rotating shaft 4 has an upper support shaft 8, a bearing 9 constituted from a ball bearing and a lower support shaft 10. One end side of the upper support shaft 8 is connected to the exterior case 2 and the other end side thereof is connected to an upper portion of the bearing 9. One end side of the lower support shaft 10 is connected to the vehicle shaft 5 of the drive part 3 and the other end side thereof is connected to a lower portion of the bearing 9. Further, the upper support shaft 8 and the exterior case 2 are connected at a position that a center of gravity of the exterior case 2 lies on a shaft line of the lower support shaft 10 of the rotaional shaft 4. Weight of the exterior case 2 is set to an extent so as not to rotate even when the drive part 3 rotates so that the weight has enough large moment of inertia against the rotational resistance of the bearing 9. As one example, the exterior case 2 weight of which is 10.0 kg or more is utilized against the bearing 9 rotational resistance of which is 0.001 Nm.

The moving body 1 in the present embodiment conducts travelling operation while balancing before and after through the inverted pendulum control. Thereby, even if the drive wheels 6 are two left and right, the exterior case 2 is supported by the drive part 3 and the exterior case 2 is not grounded. Therefore, it is not necessary to provide the driven wheels and the like in the exterior case 2. Therefore, it can be prevented moment generation in the exterior case 2 in a case that the driven wheels and the like are provided.

Next, with reference to Fig. 2, an electrical constitution of the moving body 1 will be described. Fig. 2 is a block diagram showing an electrical constitution of the moving body 1. The moving body 1 has a control portion 20 to control each portion of the moving body 1. The control portion 20 has the CPU 21, a ROM 22 and a RAM 23 and these are respectively connected to an I/O port 25 through a bus line 24. Further, to the I/O port 25, the drive wheel motor 7, the HMI portion 11, a speed sensor 26 to detect a travel speed (unit is km/h) of the moving body 1 and a relative angle sensor 27 to detect a relative angle (unit is rad) of exterior case 2 and the drive part 3 are respectively connected.

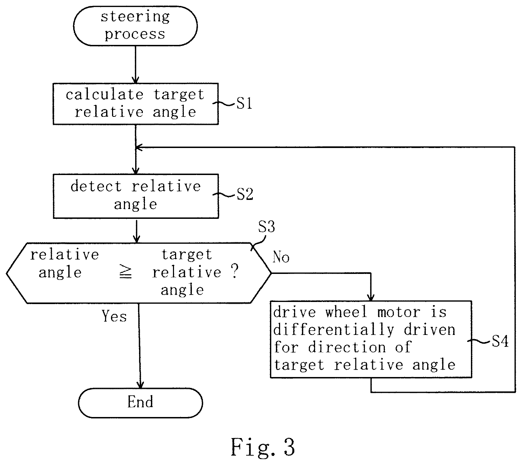

The CPU 21 is an arithmetic unit to control each portion connected through the bus line 24. The ROM 22 is a non-rewritable nonvolatile memory in which a control program executed by the CPU 21 and fixed value data and the like are stored. Concretely, a control program 22a is stored in the ROM 22. When the control program 22a is executed by the CPU 21, the steering process in Fig. 3 is executed.

The RAM 22 is a memory to store various work data and flags and the like in rewritable manner when the CPU 21 executes the control program 22a, and in the RAM 23, there are provided a relative angle memory 23a in which a relative angle of the exterior case 2 and the drive part 3 detected from the relative angle sensor 27 is stored and a target relative angle memory 23b in which a target relative angle (unit is rad) of the exterior case 2 and the drive part 3 is stored.

Next, with reference to Fig. 3, the steering process executed by the CPU 21 will be described. Fig. 3 is a flowchart of the steering process. The steering process is a process to change the moving direction of the moving body 1. In a case that the moving direction is directly input by the user H through the HMI portion 11 or when the moving body 1 follows up the user H, the steering process is executed in a case that the moving direction to maintain an appropriate position between the moving body 1 and the user H is determined.

First, in the steering process, the target relative angle between the exterior case 2 and the drive part 3 is calculated based on the moving direction input or determined and the travelling speed detected from the speed sensor 26 and is stored in the target relative angle memory 23b (S1). After the process of S1, the relative angle is detected by the relative angle sensor 27 and is stored in the relative angle memory 23a (S2).

After the process of S2, it is confirmed whether or not a value of the relative angle memory 23a is a value of the target relative angle memory 23b or more (S3). When the value of the relative angle memory 23a is the value of the target relative angle memory 23b or more (S3: Yes), the steering process is terminated. On the other hand, when the value of the relative angle memory 23a is smaller than the value of the target relative angle memory 23b (S3: No), the drive wheel motor 7 is differentially driven so that the drive part 3 faces to the direction of the value of the target relative angle memory 23b (S4). After the process of S4, processes after S2 are repeated.

As described in the above, according to the moving body 1 of the present embodiment, the exterior case 2 and the drive part 3 are relatively and rotatably supported through the rotating shaft 4. Further, the upper support shaft 8 of the rotating shaft 4 and the exterior case 2 are connected at the position that the center of weight of the exterior case 2 lies on the shaft line of the lower support shaft 10 of the rotating shaft 4. Weight of the exterior case 2 is set to an extent so as not to rotate even when the drive part 3 rotates so that the weight has enough large moment of inertia against the rotational resistance of the bearing 9.

Here, in a case that the moving direction of the moving body 1 is changed during travelling, the target relative angle of the exterior case 2 and the drive part 3 is calculated based on the changed moving direction and the travelling speed detected by the speed sensor 26 and is stored in the target relative angle memory 23b. Further, the left and right drive wheel motors 7 are differentially driven so that relative angle detected from the relative angle sensor 27 and the value of the target relative angle memory 23b mutually coincides. Even in this case, since the center of weight of the exterior case 2 still lies on the shaft line of the lower support shaft 10, moment generation to the exterior case 2 can be suppressed. Therefore, since the drive part 3 rotates around the bearing 9 of the rotating shaft, even though the moving direction of the moving body 1 is changed during travelling, the moving direction of the drive part 3 can be changed without changing the facing direction of the exterior case 2.

For example, in a case that the moving body 1 travels while the user H faces the HMI portion 11, even if the moving direction is changed, the HMI portion 11 can be maintained in a state that the HMI portion 11 faces the user H. Therefore, information from the HMI portion 11 can be appropriately provided to the user H and it can be maintained a position that the user H can easily operate the HMI portion 11.

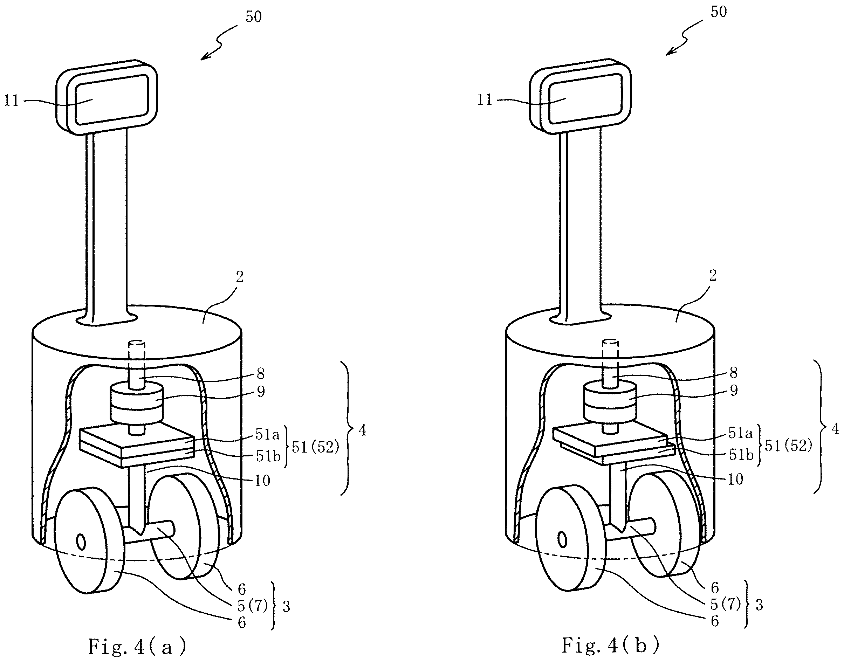

Next, with reference to Figs. 4 to 6, the second embodiment according to the present invention will be described. In the above first embodiment, the exterior case 2 and the drive part 3 are connected through the rotating shaft 4 and the drive motors 7 of the drive part 3 are differentially driven, thereby the moving direction of the drive part 3 is changed without changing the facing direction of the exterior case 2. In the second embodiment, it is provided the left and right weight transfer device 51 in the drive shaft 4 through which a position of a part of the drive part 3 and the lower support shaft 10 is horizontally transferred in the left and right direction to a moving body 50. In the second embodiment, to the same portions as those in the first embodiment mentioned above, the same references as those in the first embodiment are attached and explanation thereof will be omitted.

Fig. 4(a) is a partial sectional view represented by cutting off a part of the exterior case of the moving body 50 in the second embodiment and Fig. 4(b) is a partial sectional view of the moving body 50 in a case that the left and right weight transfer device is operated in the second embodiment. In the moving body 50, it is provided the left and right weight transfer device 51 to horizontally move a position of a part of the drive part 3 and the lower support shaft 10 to the left and right direction to the lower support shaft 10 of the rotating shaft 4.

The left and right weight transfer device 51 is constituted from an upper plate 51a which is an upper plate member and a lower plate 51b which is a lower plate member in two plate members mutually overlapping and a left and right weight transfer motor 52 to transfer the upper plate 51a and the lower plate 51b in the left and right direction. Based on that the left and right transfer motor 52 is driven and the lower plate 52b is transferred in the left and right direction, the upper plate 51a and the lower plate 51b can be displaced in the left and right direction (hereinafter, called as "left and right displacement") (see Fig. 2(b)). Thereby, a part of the drive part 3 and the lower support shaft 10 (that is, the lower support shaft 10 lower than the lower plate 51b) is transferred in the left and right direction and the center of weight of the exterior case 2 is transferred in the left and right direction. Here, transfer amount of the upper plate 51a and the lower plate 51b in the left and right direction lies within a range that the upper plate 51a and the lower plate 51b do not collide with the exterior case 2 during travelling.

Further, from the left and right weight transfer motor 52, an output current and an output value of the motor are output to the CPU 21, thereby torque control of the left and right weight transfer motor 52 is conducted by the CPU 21. Here, as the left and right weight transfer motor 52, it can be exemplified an induction motor or a brushless motor.

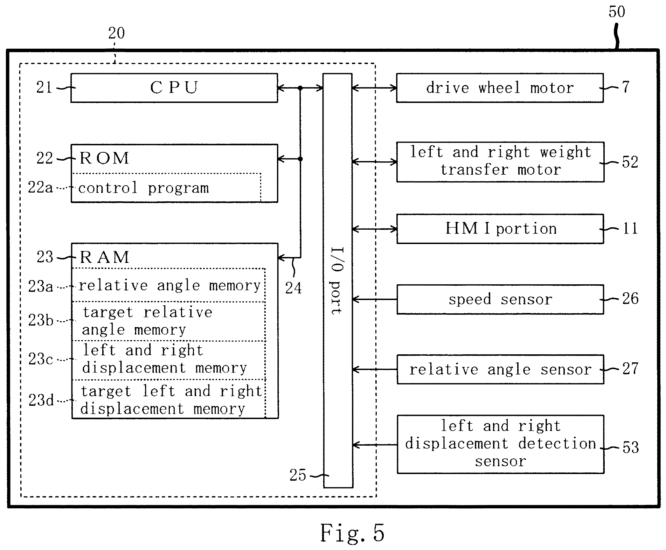

Next, with reference to Fig. 5, an electrical constitution of the moving body 50 in the second embodiment will be described. Fig. 5 is a block diagram showing an electrical constitution of the moving body 50 in the second embodiment. In the moving body 50 of the present embodiment, the left and right weight transfer motor 52 and a left and right displacement detection sensor 53 to detect left and right displacement (unit is m) in the left and right weight transfer device 51 are connected to the I/O port 25. Further, in the RAM 23, there are provided a left and right displacement memory 23c to store the left and right displacement detected by the left and right displacement detection sensor 53 and a target left and right displacement memory 23d to store a target value (unit is m) of the left and right displacement in the left and right weight transfer device 51.

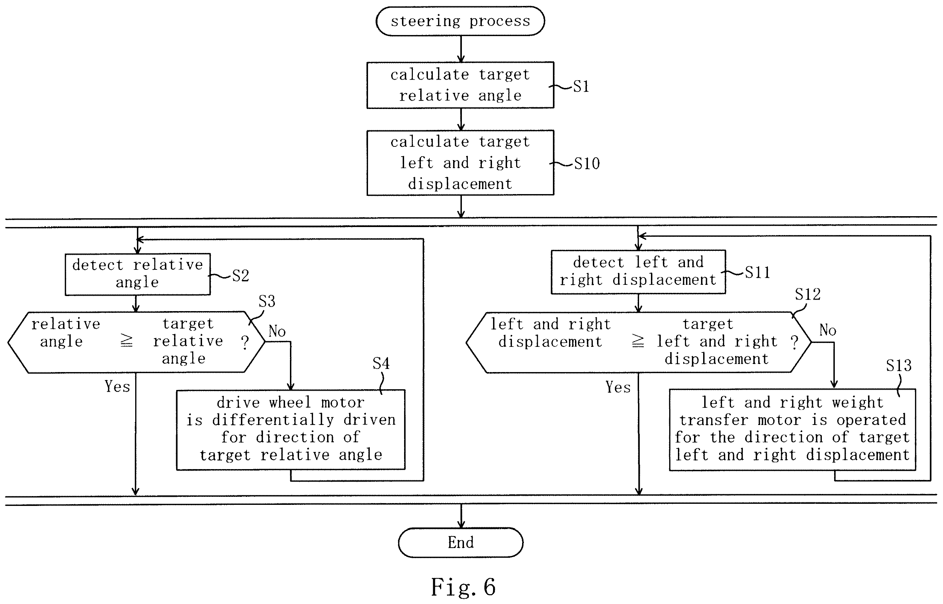

Next, with reference to Fig. 6, the steering process in the second embodiment will be described. Fig. 6 is a flowchart of the steering process in the second embodiment. After process of S1, a target left and right displacement in the left and right weight transfer device 51 is calculated based on the moving direction input by the user H or the moving direction determined to maintain an appropriate position to the user H and the travelling speed detected from the speed sensor 26, thereafter is stored in the target left and right displacement memory 23d (S10). Concretely, it is calculated deviation in the left and right direction of the center of weight of the exterior case 2 which occurs according to change of the moving direction of the moving body 50 during travelling and which is supposed due to centrifugal force and the like to the moving body 50. That is, it is calculated the direction and size of the left and right displacement in the left and right weight transfer device 51 to correct the deviation to such deviation in the left and right direction from the shaft line of the lower support shaft 10 of the rotating shaft 4.

After process of S10, processes of S2 to S4 and processes of S11 to S13 mentioned later are executed in parallel. After process of S10, in parallel with processes of S2 to S4, the left and right displacement in the left and right weight transfer device 51 is detected by the left and right displacement detection sensor 53 and is stored in the left and right displacement memory 23c (S11) . After process of S11, it is confirmed whether or not the value of the left and right displacement memory 23c is the value of the target left and right displacement memory 23d or more (S12) . When the value of the left and right displacement memory 23c is smaller than the value of the target left and right displacement memory 23d (S12: No), the left and right weight transfer motor 52 is operated for the direction of the value of the target left and right displacement memory 23d (S13). After process of S13, processes after S11 are repeated. On the other hand, when the value of the left and right displacement memory 23c is the value of the target left and right displacement memory 23d or more (S12: Yes), process of S13 is skipped.

After processes of S2 to S4 and processes of S11 to S13 are terminated, concretely, when the value of the relative angle memory 23a is the value of the target relative angle memory 23b or more in S3 and the value of the left and right displacement memory 23c is the value of the target left and right displacement memory 23d or more, the steering process is terminated. Here, although processes of S2 to S4 and processes of S11 to S13 are processed in parallel, it may be conceivable that processes of S2 to S4 are first conducted and thereafter processes of S11 to S13 are conducted. Or it may be conceivable that processes of S11 to S13 are first conducted and thereafter processes of S2 to S4 are conducted.

As described in the above, according to the moving body 50 of the second embodiment, it is provided on the lower support shaft 10 the left and right weight transfer device 51 which horizontally transfers the position of a part of the drive part 3 and the lower support shaft 10 in the left and right direction. Here, when the moving direction of the moving body 50 is changed during travelling thereof, the target left and right displacement in the left and right weight transfer device 51 is calculated based on the changed moving direction and the travelling speed detected by the speed sensor 26 and is stored in the target left and right displacement memory 23d. Further, the left and right weight transfer motor 52 is operated so that the left and right displacement of the left and right weight transfer device 51 detected by the left and right displacement detection sensor 53 and the value of the target left and right displacement memory 23d mutually coincide, thereby the center of weight of the exterior case 2 is horizontally transferred in the left and right direction. That is, the position of the center of weight of the exterior case 2, which is deviated from the shaft line of the lower support shaft 10 of the rotating shaft 4 due to centrifugal force and the like generated by change of the moving direction of the moving body 50, is corrected on the shaft line of the lower support shaft 10 of the rotating shaft 4. Therefore, since travelling of the moving body 50 is made stable and the exterior case 2 is supported by the drive part 3 without providing driven wheels and the like to the exterior case 2, the moving body 50 can be travelled in a state that the exterior case 2 does not ground.

In the above, although the present invention is described based on the embodiments, the present invention is not limited to the embodiments mentioned above, and it can be easily guessed that various improvements and modifications can be made within a range not deviating the scope of the present invention.

In the above embodiments, the bearing 9 is constituted from the ball bearing. However, this bearing 9 is not necessarily limited to this, and the bearing 9 may be constituted from various bearings such as oil bearing, air bearing, magnetic bearing.

In the above embodiments, the rotating shaft 4 is constituted so that the upper support shaft 8 connected to the exterior case 2 and the lower support shaft 10 connected to the drive part 3 are connected to the bearing 9. However, the rotating shaft 4 is not necessarily limited to this, and further it may be constituted so that a motor (hereinafter, called as "motor for shaft") to relatively rotate the upper support shaft 8 and the lower support shaft 10 is provided. By rotating the motor for shaft, the upper support shaft 8 and the lower support shaft 10 rotate, thereby the exterior case 2 can be faced to any direction.

Further, in a case that the steering process in Fig. 3 and Fig. 6 is not executed while the moving body 1, 50 travels, when change of the relative angle of the exterior case 2 and the drive part 3 is detected by the relative angle sensor 27, the motor for shaft is rotated in the reverse direction to change of the relative angle, thereby the facing direction of the exterior case 2 can be retained to a constant direction. Here, as the motor for shaft, it is preferable that it is utilized induction motor or brushless motor rotational resistance of which is small when the motor is not driven, so that rotation by the bearing 9 is not prevented.

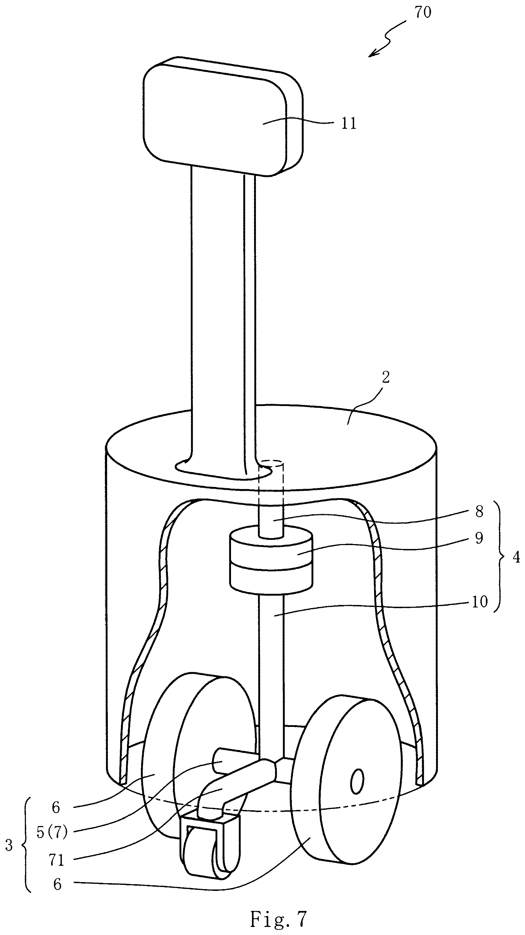

In the above embodiments, the moving body 1, 50 conducts travelling operation while balancing before and after to travelling direction through the inverted pendulum control. However, it is not necessarily limited to this, and it may be constituted so as to omit the inverted pendulum control by providing the driven wheels 71 to the drive part 3. With reference to Fig. 7, a moving body 70 in the modification will be described.

Fig. 7 is a partial sectional view representing by cutting off a part of the exterior case of the moving body 70. Here, the same references are attached to the same portions as in the first embodiment and the second embodiment, and explanation thereof will be omitted. The moving body 70 in the modification has a driven wheel 71 constituted from a rotatable caster and the driven wheel 71 is vertically connected to a center portion in the longitudinal direction of the vehicle shaft 5. The driven wheel 71 is provided so as to be always grounded to the road surface on which the moving body 70 travels with the drive wheels 6. Therefore, since the moving body 70 is supported at three points of the left and right drive wheels 6 and the driven wheel 71, posture thereof becomes stable even when the inverted pendulum control is not conducted. Further, since the driven wheel 71 is provided to the drive part 3, the exterior case 2 can be supported by the drive part 3 even when the driven wheel is not provided to the exterior case 2, thereby it can be constituted so that the exterior case 2 is not grounded. Therefore, it can be prevented moment generation to the exterior case 2 in a case that the driven wheel is provided to the exterior case 2.

In the second embodiment, it is constituted so that the left and right weight transfer motor 52 is operated by the moving direction and the left and right displacement of the left and right weight transfer device 51. However, it is not necessarily limited to this, and it may be constituted so that, instead of the left and right displacement detection sensor 53, it is provided a sensor to detect weight in the left and right direction in the moving body 50, the target value such as weight difference or ratio in the left and right direction is calculated to the moving direction and it is disappeared a difference between the target value and the weight difference or ratio in the left and right direction detected by the sensor detecting weight in the left and right direction.

In the above second embodiment, it is constituted so that the position of a part of the drive part 3 and the lower support shaft 10 is horizontally transferred in the left and right direction through the left and right weight transfer device 51. However, it is not necessarily limited to this. It may be constituted so that a tilting mechanism is provided in the left and right weight transfer device 51 and the position of a part of the drive part 3 and the lower support shaft 10 is inclined in the left and right direction through the tilting mechanism. In this case, the maximum inclined angle in the left and right direction is set to an extent that the exterior case 2 does not ground to the road surface on which the moving body 50 travels. A part of the drive part 3 and the lower support shaft 10 is inclined in the left and right direction through the left and right weight transfer device 51 corresponding to the moving direction of the moving body 50. Thereby, the center of weight in the exterior case 2 of the moving body 50 is transferred in the left and right direction.

Therefore, the position of the center of weight of the exterior case 2 deviated from the shaft line of the lower support shaft 10 of the rotating shaft 4 due to centrifugal force and the like generated due to change of the moving direction of the moving body 50, can be corrected on the shaft line of the lower support shaft 10 of the rotating shaft 4. Further, since the exterior case 2 can be supported by the drive part 3 without providing the driven wheels and the like to the exterior case 2, the moving body 50 can be travelled while the exterior case 2 does not ground to the road surface. Here, the left and right weight transfer device 51 may be constituted so that there are provided both the constitution in which the position of a part of the drive part 3 and the lower support shaft 10 is inclined in the left and right direction and the constitution of the second embodiment in which the position of a part of the drive part 3 and the lower support shaft 10 is horizontally transferred in the left and right direction.

In the second embodiment, it is constituted so that it is provided the left and right weight transfer device 51 through which the position of a part of the drive part 3 and the lower support shaft 10 is horizontally transferred in the left and right direction. However, it is not necessarily limited to this, and instead of the left and right weight transfer device 51, it may be constituted so that a left and right weight transfer device having a slide mechanism capable of displacing the position of a part of the drive part 3 and the lower support shaft 10 in the front and back direction and in the left and right direction. The center of weight of the exterior case 2 is controlled so as to position on the shaft line of the lower support shaft 10 by the slide mechanism. For example, in a case that a baggage and the like is put on the exterior case 2, thereby the center of weight of the exterior case 2 is shifted, the center of weight of the exterior case 2 is returned on the shaft line of the lower support shaft 10 through the slide mechanism.

Therefore, even if the moving body 50 travels in the above state and the drive part 3 changes the moving direction during travelling, moment generation to the exterior case 2 can be suppressed. Thus, the moving direction of the drive part 3 can be changed without changing the facing direction of the exterior case 2 during travelling of the moving body 50.

### [Reference Signs List]

1, 50, 70 moving body
2 exterior case (a part of upper vehicle body)
3 drive part (a part of lower vehicle body)
6 drive wheel
8 upper support shaft (upper side rotating shaft, a part of upper vehicle body)
10 lower support shaft (lower side rotating shaft, a part of lower vehicle body)
51 left and right weight transfer device (weight transfer means, slide mechanism)
71 driven wheel
S2 to S4, S11 to S12 control means

## Claims

1. A moving body (1, 50, 70) comprising:
a lower vehicle body (3, 10) having drive wheels (3) and a lower side rotating shaft (10); and
an upper vehicle body (2, 10) having an upper side rotating shaft (8), the upper vehicle body (2, 10) being connected to the lower vehicle body (3, 10) through the upper side rotating shaft (8);
wherein both the upper vehicle body (2, 10) and the lower vehicle body (3, 10) are constituted so as to be relatively rotatable through the upper side rotating shaft (8) and the lower side rotating shaft (10),
wherein the upper vehicle body (2, 10) has enough large moment of inertia against rotational resistance of the upper side rotating shaft (8) to an extent that the upper vehicle body (2, 10) does not rotate even when the lower vehicle body (3, 10) rotates, and
wherein a center of mass of the upper vehicle body (2, 10) positions on a shaft line of the lower side rotating shaft (10).

2. The moving body (1, 50, 70) according to claim 1,
wherein the upper vehicle body (2, 10) is constituted so as not to ground, and
wherein it is provided control means (S2 to S4, S11 to S12) for supporting the upper vehicle body (2, 10) through inverted pendulum control by the drive wheels (3) when the lower vehicle body (3, 10) is operated in a front and back direction.

3. The moving body (1, 50, 70) according to claim 1 or claim 2, further comprising:
weight transfer means (51) for transferring the center of mass of the upper vehicle body (2, 10) in a left and right direction;
wherein the control means (S2 to S4, S11 to S12) supports the upper vehicle body (2, 10) by controlling the weight transfer means (51) when the lower vehicle body (3, 10) operated in the left and right direction.

4. The moving body (1, 50, 70) according to claim 3,
wherein the weight transfer means (51) is provided to the lower side rotating shaft (10) of the lower vehicle body (3, 10), and
wherein it is provided a slide mechanism (51a, 51b) capable of displacing a relative position of the lower side rotating shaft (10) of a drive wheel (3) side and the lower side rotating shaft (10) of an upper vehicle body (2, 10) side in the left and right direction.

5. The moving body (1, 50, 70) according to claim 3 or claim 4,
wherein the weight transfer means (51) is provided to the lower side rotating shaft (10) of the lower vehicle body (3, 10), and
wherein it is provided a tilting mechanism capable of inclining the lower side rotating shaft (10) in the left and right direction.

6. The moving body (1, 50, 70) according to claim 1,
wherein the upper vehicle body (2, 10) is constituted so as not to ground, and
wherein a driven wheel is provided to the lower vehicle body (3, 10).

7. The moving body (1, 50, 70) according to any one of claims 1 to 6, further comprising:
a slide mechanism provided to the lower side rotating shaft (10) of the lower vehicle body (3, 10), the slide mechanism capable of displacing a relative position of the lower side rotating shaft (10) of a drive wheel (3) side and the lower side rotating shaft (10) of an upper vehicle body (2, 10) side in the front and back direction and in the left and right direction, and
slide control means for controlling the slide mechanism (51a, 51b) when the center of mass of the upper vehicle body (2, 10) is shifted and for returning the center of mass of the upper vehicle body (2, 10) on the shaft line of the lower side rotating shaft (10).
